# EUROPÄISCHE PATENTSCHRIFT

(11) **EP 0 699 550 B1**
(45) Veröffentlichungstag und Bekanntmachung des Hinweises auf die Patenterteilung: **11.06.1997**
(21) Anmeldenummer: 95112290.2
(22) Anmeldetag: 04.08.1995
(51) Int. Cl.: B60K 7/00, A61G 5/04, B60T 7/12

(54) **Elektrischer Energiesparantrieb für Kleinfahrzeuge**
Energy saving electrical drive for small vehicles
Propulsion électrique économisant l'énergie, pour petits véhicules

(30) Priorität: 31.08.1994 DE 9414054 U
(43) Veröffentlichungstag der Anmeldung: 06.03.1996
(73) Patentinhaber: Riepl, Gerhard, 33693 Bielefeld/Quelle (DE)
(72) Erfinder: Riepl, Gerhard, 33693 Bielefeld/Quelle (DE)
(74) Vertreter: Neymeyer, Franz, Dipl.-Ing. (FH)

(56) Entgegenhaltungen:
- EP-A- 0 588 478
- EP-A- 0 609 705
- WO-A-93/15546
- DD-A- 254 140
- DE-C- 213 536
- GB-A- 2 026 110

## Beschreibung

Die Erfindung betrifft einen elektrischen Antrieb für Kleinfahrzeuge, insbesondere Rollstühle, bestehend aus einem Gleichstrommotor, welcher als Nabenmotor im Laufrad des Kleinfahrzeuges angeordnet ist und als Außenläufermotor ausgebildet ist.

Es ist aus der DE-PS 41 27 257 C2 ein Antrieb bekannt, der für ein Kleinfahrzeug mit einem Gestell und wenigstens zwei Laufrädern, insbesondere für einen Rollstuhl vorgesehen ist und aus einem Elektromotor, einem Getriebe und einer Kupplung als Antriebsteil besteht, welcher beispielsweise für ein großes Laufrad des Rollstuhles vorgesehen ist. Als Getriebe wird ein Planetenradgetriebe eingesetzt.
Die Bauteile des Antriebes sind innerhalb eines topfartigen Gehäuses angeordnet, welches die Radnabe des Laufrades bildet, wobei die Radnabe über ein Kugellager auf dem Zahnkranzträger des Planetenradgetriebes gelagert ist. Zwischen dem Planetenradgetriebe und der Radnabe ist eine manuell betätigbare Rastkupplung vorgesehen, welche es gestattet, im Schiebebetrieb die Radnabe und das Getriebe zu entkoppeln. Der Elektromotor ist als mehrpoliger, elektronisch kommutierter, bürstenloser Gleichstrommotor mit einem Permantentmagnet-Innenläufer ausgebildet, welcher mit dem nachgeschalteten Planetenradgetriebe über eine entsprechende Antriebswelle gekoppelt ist.
Dieser bekannte Antrieb zeichnet sich durch eine kurze Baulänge aus, so daß er nur einen geringfügigen Überstand über die Laufradebene des jeweiligen Laufrades aufweist. Desweiteren ist eine Steuereinrichtung vorgesehen, welche im Bedienteil des Rollstuhls angeordnet ist. Mit Hilfe dieser Steuereinrichtung werden die Elektromotoren der beiden Laufräder des Rollstuhls über eine elektronische Motorsteuerung angesteuert, welche jeweils motornahe in der zugehörigen Laufradnabe untergebracht ist.

Es sind auch weitere Antriebe für Kleinfahrzeuge bekannt, bei welchen den Elektromotoren Getriebe verschiedenster Typen nachgeschaltet sind. Je nach Einsatzfall werden dabei Schnecken-, Stirnrad- oder Kegelradgetriebe oder auch deren Kombinationen, aber auch Abrollsysteme zur Drehmomenterhöhung verwendet. Diese Untersetzungsgetriebe sind bei den bekannten Antrieben notwendig, um die Motordrehzahl des Elektromotors, welche in der Regel bei etwa 1000 - 3000 U/min liegt, auf eine Drehzahl der Laufräder von etwa maximal 50 - 100 U/min zu reduzieren.

All diesen Antriebssystemen ist gemeinsam, daß sie aus vielen Einzelteilen zusammengesetzt werden müssen, so daß hohe Material- und Fertigungskosten anfallen. Auch weisen die bekannten Antriebe ein hohes Eigengewicht auf. Desweiteren verursachen die Getriebe im Betrieb einen hohen Geräuschpegel und verringern durch ihre stets vorhandene innere Reibung den Wirkungsgrad des gesamten Antriebes.
Für Kleinfahrzeuge, welche zeitweilig von Hand geschoben werden müssen, wie z.B. Rollstühle, müssen zusätzlich Kupplungen zwischen dem Laufrad und dem Getriebe zum Auskoppeln vorgesehen sein, um einen möglichst kleinen Schiebewiderstand zu erreichen. Dadurch fallen weitere zusätzliche Montage- und Materialkosten an.
Auch benötigen derartige Getriebe Schmiermittel, so daß zusätzlich die Radnabe bzw. das Getriebegehäuse speziell abgedichtet sein muß und ebenfalls zu höheren Herstellkosten führt.

Es ist ein weiterer Antrieb der gattungsgemäßen Art für Kleinfahrzeuge, insbesondere Rollstühle aus der WO-A-93/15546 bekannt, welcher einen Außenläufermotor aufweist, der als Nabenmotor in der Radnabe eines Laufrades eines Kleinfahrzeuges anordenbar ist. Zur Gewichtseinsparung ist bei diesem Antrieb kein Getriebe vorgesehen. Dieser Außenläufermotor verfügt über eine feststehende, nicht rotierende Lagerachse, die mit dem Gestell oder dem Rahmen des Rollstuhles verbunden ist und den Grundkörper des Außenläufermotors bildet. Auf der Lagerachse sind seitlich jeweils ein Lager aufgesetzt, auf denen jeweils eine zugehörige, bezüglich der Lagerachse drehbare Lagerschale befestigt ist. Die Lagerschalen bilden das rotierende Gehäuse des Außenläufermotors. Die äußeren Seitenwände der Lagerschalen bilden gleichzeitig die seitlichen Außenwände des Außenläufermotors. Auf den Außenflächen der Lagerschalen ist das Rad des Rollstuhles befestigbar. Auf der Lagerachse ist ein Stator angeordnet, der aus einer Vielzahl von Permanentmagneten besteht, der mit Ankerwicklungen versehen sein kann. An der zylindrischen Innenwand der Lagerschalen können Permanentmagnete zum Erzeugen eines permanenten Magnetfeldes angeordnet sein, so daß bei einer entsprechenden Erregung der Ankerwicklungen der Außenläufermotor in Betrieb gesetzt wird.
Durch entsprechende Wahl der Anzahl der Ankerwicklungen und der Anzahl der Permanentmagnete ist der bekannte Außenläufermotor als Langsamläufer ausgebildet, so daß auch die für einen Rollstuhlantrieb notwendigen geringen Drehzahlen erreichbar sind. Die Energieversorgung erfolgt durch entsprechende Anschlüsse und Anschlußleitungen mit einer den Außenläufermotor mit elektrischer Spannung versorgenden Batterie.

Durch diesen bekannten Direktantrieb entfällt die aufwendige, mit Verlust an mechanischer Leistung behaftete und platz- und gewichtsraubende Getriebeeinheit. Bei Unterbrechung der Stromzufuhr oder auch zum Parken des Rollstuhles ist allerdings keine Möglichkeit vorgesehen ein ungewolltes Wegrollen oder Verschieben des Rollstuhles zu verhindern.

Demgemäß liegt der Erfindung die Aufgabe zugrunde, für einen elektrischen Antrieb der gattungsgemäßen Art mit hohem Wirkungsgrad und geringen Herstellkosten bei gleichzeitig einfacher Montierbarkeit eine automatische Blockiermöglichkeit der Laufräder bei gleichzeitig kurzer und leichter Bauweise zu schaffen.

Die Aufgabe wird erfindungsgemäß dadurch gelöst, daß der Außenläufer die Radnabe des Laufrades oder die Felge des Laufrades bildet, und daß der Stator des Gleichstrommotors über ein Bremsgehäuse feststehend mit dem Kleinfahrzeug verbunden ist, und eine zentrale elektromagnetisch und manuell lösbare Federdruckbremse aufweist, welche bei Stromausfall den Außenläufer des Gleichstrommotors abbremst.

Durch die Ausbildung des Gleichstrommotors als Außenläufermotor kann bei entsprechender Polzahl ein Untersetzunggetriebe entfallen, da der Elektromotor mit einer entsprechend geringen Maximaldrehzahl von etwa 50 - 100 U/min umläuft. Diese Drehzahl kann durch unterschiedliche Anzahl der Pole und auch durch eine entsprechende elektronische Ansteuerung für verschiedene Laufraddurchmesser angepaßt werden, so daß stets eine dem Laufraddurchmesser angepaßte Drehzahl der Laufräder und damit eine ausreichend große Geschwindigkeit eines Kleinfahrzeuges erreichbar ist. Desweiteren weist der erfindungsgemäß ausgestaltete Gleichstrommotor ein wesentlich höheres Drehmoment auf als ein vergleichbarer Getriebemotor, da der Wirkungsgradverlust des Getriebes sowie Reibungsverluste von Motorabdichtungen entfallen.
Dadurch daß der Außenläufer des Gleichstrommotors gleichzeitig als Radnabe bzw. als Felge des Laufrades ausgebildet ist, ergibt sich ein äußerst einfacher Aufbau des Antriebes, so daß eine erhebliche Einsparung an Material- und Montagekosten und auch ein minimales Eigengewicht des Antriebes erreicht wird.

Desweiteren erlaubt die Anordnung des Bremsgehäuses direkt am Stator, gemäß Anspruch 2, eine leichte, preisgünstige und auch kurze Bauweise des Antriebes.

Durch die Ausgestaltung gemäß Anspruch 3 wird erreicht, daß die Federdruckbremse im normalen Betriebszustand, d.h. bei Anliegen einer bestimmten Betriebsspannung sowohl am Antrieb als auch am Lüftungsmagneten des Antriebes gelöst ist und das Kleinfahrzeug fahrbereit ist. Für den Fall von Betriebsstörungen, wie z.B. Stromausfall, schließt die Federdruckbremse automatisch, so daß das Kleinfahrzeug sicher abgebremst wird, ohne daß der Fahrer zusätzlich reagieren muß. Aber auch beim Anstellen des Kleinfahrzeuges ergibt sich der Vorteil, daß durch einfaches Ausschalten bzw. durch Ziehen des Zündschlüssels die Federdruckbremse automatisch aktiviert wird, so daß beim Parken des Kleinfahrzeuges ebenfalls keine weiteren Aktivitäten des Fahrers erforderlich sind.

Durch die Ausgestaltungen gemäß der Ansprüche 4 und 7 wird erreicht, daß das Kleinfahrzeug im Störfall, wenn also die Federdruckbremse aktiviert ist, diese manuell wieder zu lösen ist, so daß das Kleinfahrzeug z.B. bei leeren Batterien einfach geschoben werden kann. Durch die zentrale Anordnung der Lüftstange und die am Ringbund der Lüftstange und an der Anpreßplatte angeordneten Keilflächen wird eine einfache und kompakte Bauweise erreicht. Zum Lösen der Federdruckbremse wird die Lüftstange um ihre Längsachse um etwa 90° gedreht, so daß die Keilflächen des Ringbundes und der drehfest im Bremsgehäuse geführten Anpreßplatte sich relativ zueinander bewegen, wodurch die Anpreßplatte in axialer Richtung entgegen der Federkraft bewegt wird. Damit ist ein einfaches und sicheres Lösen der Federdruckbremse gewährleistet, wobei in der Anpreßplatte auch Rastnuten vorgesehen sein können, in welche die Keilflächen des Ringbundes nach der 90°-Drehung einrasten können, so daß ein selbsttätiges Verdrehen der Lüftstange ausgeschlossen ist.

Weitere vorteilhafte Ausgestaltungen der Erfindung sind den Ansprüchen 5, 6 und 8 bis 10 entnehmbar.

Anhand der Zeichnung wird die Erfindung im folgenden näher erläutert. Es zeigt:
- Fig. 1: einen elektrischen Antrieb im Schnitt;
- Fig. 2: den elektrischen Antrieb aus Fig. 1 mit Stützscheibe und Stützrad in Seitenansicht I.

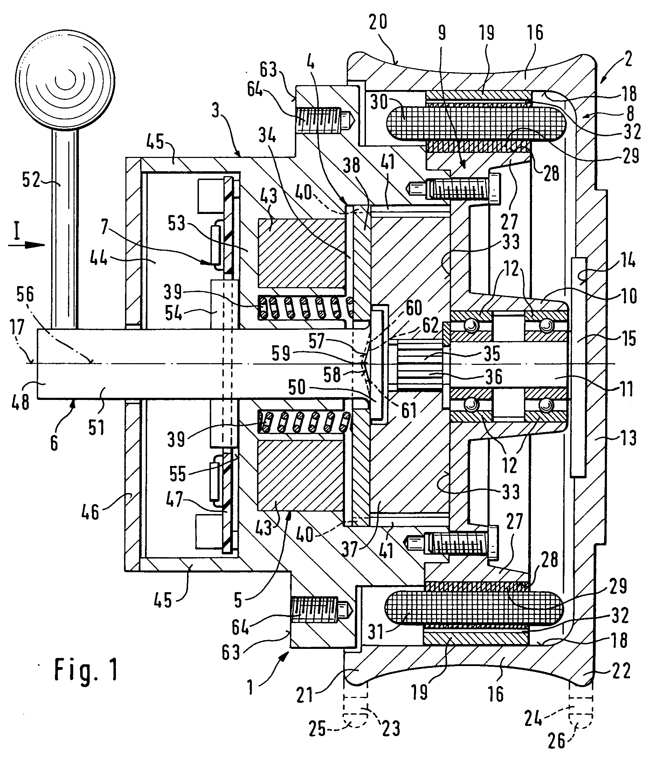

Fig. 1 zeigt einen elektrischen Antrieb 1 für Kleinfahrzeuge, wie beispielsweise Rollstühle, bestehend aus einem bürstenlosen Gleichstrommotor 2, einem Bremsgehäuse 3, einer Federdruckbremse 4 mit magnetischer Bremslüftvorrichtung 5, einer Handlüftvorrichtung 6 und einer im Bremsgehäuse 3 angeordneten Leistungselektronik 7.

Der Gleichstrommotor 2 weist einen topfförmigen Außenläufer 8 und einen innenliegenden Stator 9 auf. Der Stator 9 ist mit einer zentralen Lagernabe 10 versehen, in welcher der Außenläufer 8 über eine Radnabenwelle 11 und zweier Radialkugellager 12 drehbar gelagert ist. Zur zentrierten Befestigung des Außenläufers 8 weist dieser eine Radscheibe 13 auf, welche statorseitig mit einer entsprechenden Ausnehmung 14 annähernd spielfrei auf einem Montageflansch 15 der Radnabenwelle 11 aufgeschraubt ist. Die Radscheibe 13 weist bremsgehäuseseitig eine umlaufende, koaxial zur Drehachse 17 des Außenläufers 8 verlaufende Ringwand 16 auf, welche den Stator 9 vollständig radial umschließt.

Die zylindrische Innenfläche 18 der Ringwand 16 ist mit mehreren Permanentmagneten 19 versehen, welche die Magnetpole des Außenläufers bilden. Durch eine entsprechend hohe Anzahl von Permanentmagneten 19 wird eine entsprechend hohe Polzahl erreicht, wodurch die notwendige geringe Nenndrehzahl, bei gleichzeitig hohem Drehmoment des Gleichstrommotors 2 erreicht wird.

Die äußere Mantelfläche 20 der Ringwand 16 ist zur Aufnahme eines Gummireifens (in der Zeichnung nicht dargestellt) als Felge ausgebildet. Sind an einem Kleinfahrzeug Laufräder mit größerem Durchmesser, wie dies beispielsweise an einem Rollstuhl der Fall sein kann, vorgesehen, so kann die Ringwand 16 in ihren axialen Endbereichen 21 und 22 mit umlaufenden, radial nach außen vorstehenden und mit Querbohrungen 23, 24 versehenen Speichenstegen 25, 26 versehen sein (gestrichelt dargestellt), so daß eine Felge größeren Durchmessers beispielsweise über Speichen (in der Zeichnung nicht dargestellt), welche in den Querbohrungen 23, 24 entsprechend eingehängt werden, am Außenläufer befestigbar ist.

Der Stator 9 weist einen umlaufenden zylindrischen koaxial zur Radnabenwelle 11 verlaufenden Statorträger 27 auf, auf dessen Mantelfläche 28 Statorbleche 29 mit den entsprechend zugehörigen Statorwicklungen 30, 31 angeordnet sind. Der innere lichte Abstand der sich jeweils gegenüberliegenden Permanentmagnete 19 und der Durchmesser der Statorbleche 29 ist so aufeinander abgestimmt, daß zwischen den Permanentmagneten 19 und den Statorblechen 29 ein geringer Luftspalt 32 besteht. Damit wird bei geringer Drehzahl eine hohe Leistungsfähigkeit des Gleichstrommotors 2 erreicht.

Der Stator 9 ist in seinem radial zwischen seiner Lagernabe 10 und seinem Statorträger 27 als planebene Scheibe ausgeführt und bildet mit seiner zum Bremsgehäuse 3 hin liegenden Planfläche 33 eine der Reibflächen der Federdruckbremse 4. Durch diese Ausgestaltung wird eine leichte und raumsparende Bauweise erreicht.

Am Stator 9 ist das Bremsgehäuse 3 dem Außenläufer 8 gegenüberliegend zentriert angeschraubt. Das Bremsgehäuse 3 ist dabei sowohl in seiner Außenkontur als auch im Innenraum abgesetzt ausgeführt und weist statorseitig einen im wesentlichen kreisrunden Bremsraum 34 auf, in welchen die Radnabenwelle 11 mit einem bremsgehäuseseitigen Kupplungszapfen 35 hineinragt. Der Kupplungszapfen 35 der Radnabenwelle 11 weist eine Kerbverzahnung 36 auf, welche zur drehfesten und axial verschieblichen Lagerung einer Bremsscheibe 37 dient. Anstatt der Kerbverzahnung 36 kann auch eine andere drehfeste und axial verschiebliche Lagerung der Bremsscheibe 37 auf dem Kupplungszapfen 35 vorgesehen sein, so z.B. eine einfache Nut-Feder-Verbindung. Die Bremsscheibe 37 ist mit radialem Spiel in den Bremsraum 34 eingepaßt. Auf der dem Stator 9 gegenüberliegenden Seite ist an der Bremsscheibe 37 eine Anpreßplatte 38 vorgesehen, welche mittels mehrerer Druckfedern 39 (in der Zeichnung nur zwei sichtbar) die Bremsscheibe 37 gegen den Stator 9 preßt. Die Druckfedern 39 sind dabei auf einer Kreisbahn gleichmäßig verteilt angeordnet, so daß die Anpreßplatte 38 und somit die Bremsscheibe 37 gleichmäßig gegen die Planfläche 33 des Stators 9 gedrückt wird. Die Anpreßplatte 38 weist an ihrem Umfang mehrere Führungsnasen 40 auf, mit welchen sie in entsprechenden Längsnuten 41 im Bremsgehäuse 3 bzw. im Bremsraum 34 unverdrehbar und axial verschieblich geführt ist. Somit dient die Anpreßplatte 38 mit ihrer bremsscheibenseitigen Planfläche als zweite Reibfläche der Federdruckbremse 4.

Auf der Rückseite der Anpreßplatte 38 ist im Bremsgehäuse 3 ein umlaufender Ringmagnet 43 vorgesehen, durch welchen die Anpreßplatte 38 bei Strombeaufschlagung des Ringmagneten 43 entgegen der Federkräfte der Druckfedern 39 angezogen wird, so daß die Bremsscheibe 37 zusammen mit der Radnabenwelle 11 frei umlaufen kann. Es ist auch vorstellbar, daß anstatt mehrerer Druckfedern 39 eine zentrale Schraubendruckfeder oder ein Tellerfederpaket zur Aufbringung der notwendigen Anpreßkraft auf die Anpreßplatte 38 vorgesehen sein kann.

Rückseitig ist am Bremsgehäuse 3 ein Steuerraum 44 vorgesehen, welcher radial durch eine umlaufende Ringwand 45 begrenzt ist. Der Steuerraum 44 ist mittels eines Gehäusedeckels 46 verschließbar. Im Steuerraum 44 ist eine elektronische Platine 47 angeordnet, auf welcher die Leistungselektronik 7 zur Ansteuerung sowohl des Ringmagneten 43 als auch der Statorwicklungen 30, 31 vorgesehen ist. Diese Leistungselektronik 7 kann über lösbare Adapter mit einer entsprechenden Steuerungselektronik des Kleinfahrzeuges verbunden werden, welche am Kleinfahrzeug angeordnet ist. Durch die Anordnung der Leistungselektronik 7 im allseitig metallisch umschlossenen Steuerraum 44 wird ein störungsfreier Betrieb der Leistungelektronik 7 sichergestellt, da die Leistungselektronik 7 allseitig nach außen gegen elektromagnetische oder elektrische Störfelder abgeschirmt ist.

Die Handlüftvorrichtung 6 besteht aus einer zentralen, koaxial zur Radnabenwelle 11 angeordneten Lüftstange 48, welche mit einem an ihrem inneren Stangenende angeordneten umlaufenden, radial nach außen gerichteten Ringbund 50 die Anpreßplatte 38 hintergreift. Die Lüftstange 48 durchragt dabei von innen nach außen die Anpreßplatte 38, das Bremsgehäuse 3 und den Gehäusedeckel 46 und ragt aus dem Gehäusedeckel 46 heraus. An ihrem äußeren Ende 51 ist die Lüftstange 48 mit einem Betätigungshebel 52 versehen, welcher querverlaufend zur Lüftstange 48 angeordnet ist. Im Bereich der inneren Trennwand 53 zwischen dem Bremsraum 34 und dem Steuerraum 44 des Bremsgehäuses 3, auf welcher die Leistungselektronik 7 bzw. deren Platine 46 außenseitig montiert ist, weist die Lüftstange 48 einen sie durchragenden Querbolzen 54 auf, mit welchem sich die Lüftstange 48 auf der innerhalb des Steuerraumes 44 liegenden Außenfläche 55 der Trennwand 53 axial abstützt.

Zum manuellen Lösen der Federdruckbremse 4 wird mittels des Betätigungshebels 52 die Lüftstange 48 um ihre Längsachse 56 um etwa 90° gedreht. Betätigungshebelseitig bzw. anpreßplattenseitig sind auf dem radial vorspringenden Ringbund 50 Keilflächen 57, 58 bildende Erhebungen 59 vorgesehen, welche im Zusammenwirken mit entsprechenden Keilflächen 60, 61 von in der Anpreßplatte 38 ringbundseitig angeordneten Vertiefungen 62 bei der Drehbewegung die Anpreßplatte entgegen der Federkraft der Druckfedern 39 axial bewegen. Zur Arretierung in Lüftstellung, können in der Druckplatte 38 Rastnuten geringer axialer Tiefe vorgesehen sein, in welche die Erhebungen 59 des Ringbundes 50 einrasten können. Die Erhebungen 59 bzw. die Vertiefungen 62 können zur Verminderung der Reibungskräfte beim Drehen der Lüftstange 48 mehrfach am Umfang des Stegflansches 50 bzw. der Druckplatte 34 angeordnet sein, wobei der Lüftweg der Anpreßplatte 38 maximal einige Millimeter beträgt. Die Lüftstange 48 stützt sich beim Lösen der Federdruckbremse 4 mit ihrem Querbolzen 54 axial feststehend auf der Außenfläche 55 der Trennwand 53 ab.

Das Bremsgehäuse 3 weist zur Montage an einem Kleinfahrzeug einen umlaufenden Montageflansch 63 auf, welche mit entsprechenden gleichmäßig am Umfang verteilten Gewindebohrungen 64 versehen ist.

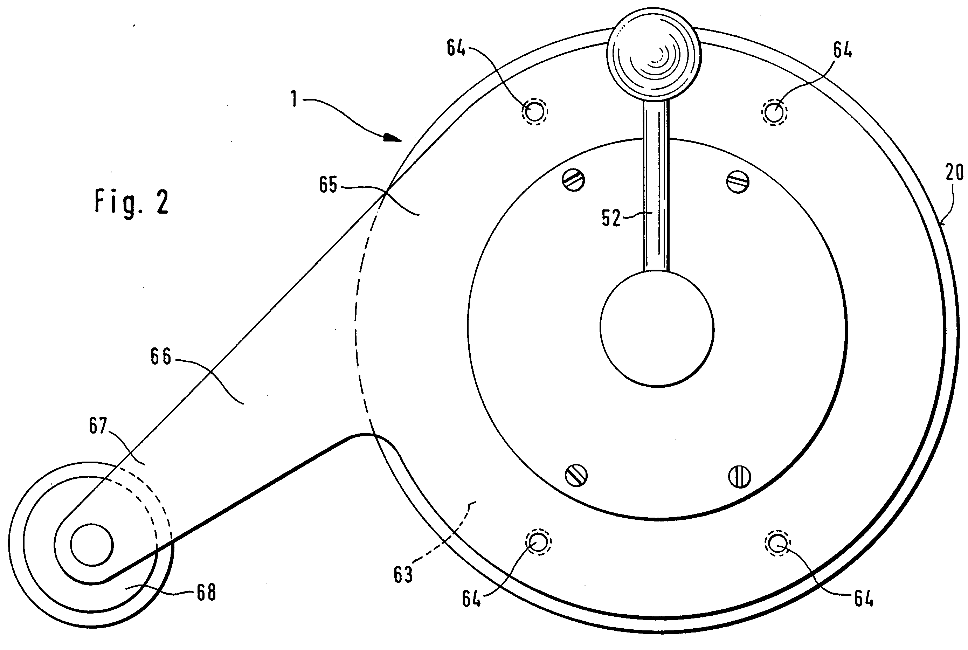

Fig. 2 zeigt den elektrische Antrieb 1 aus Fig. 1 in Seitenansicht I mit einer auf dem Montageflansch 63 angeordneten Stützscheibe 65, welche mittels Schrauben (in der Zeichnung nicht dargestellt) an den Gewindebohrungen 64 des Montageflansches 63 befestigbar ist. Die Stützscheibe 65 ist mit einem Stützbügel 66 versehen, welcher etwa tangential zur Stützscheibe 65 verläuft und an seinem radial äußeren Ende 67 mit einem Stützrad 68 versehen ist. Die Stützscheibe 65 ist in ihrem Durchmesser kleiner ausgebildet als der Durchmesser der äußeren Mantelfläche 20 der Ringwand 16 des Außenläufers 8, so daß dieser, sofern die Ringwand 16 direkt als Rad des Kleinfahrzeugesbzw. des Rollstuhles eingesetzt wird, direkt auf dem Boden abrollen kann, ohne daß die Stützscheibe 65 den Boden berührt.

Die Stützscheibe 65 ist in ihrer Dicke so ausgebildet und der Montageflansch 63 ist in seinem axialen Abstand zum Betätigungshebel 52 am Bremsgehäuse 3 so angeordnet, daß zwischen der Stützscheibe 65 und dem Betätigungshebel 52 der Lüftstange genügend Raum verbleibt, um den elektrischen Antrieb 1 zusammen mit der Stützscheibe 65 am Rahmengestell eines Rollstuhles befestigen zu können, ohne daß beim Betätigen des Betätigungshebels 52 die Gefahr des Einklemmens der Hand einer Person auftreten kann.

Durch die erfindungsgemäße Ausgestaltung wird ein leichter, raumsparender sowie leistungsstarker und kostengünstig herstellbarer Antrieb für Kleinfahrzeuge zur Verfügung gestellt, welcher einen optimalen Wirkungsgrad aufweist. Dieser elektrische Antrieb ist einfach an einem Kleinfahrzeug nachrüstbar, wobei durch entsprechende Ausgestaltung seiner Leistungselektronik, diese einer evtl. vorhandenen analogen, digitalen oder rechnergesteuerten Steuerungselektronik anpaßbar ist.

## Patentansprüche

1. Elektrischer Antrieb (1) für Kleinfahrzeuge, insbesondere Rollstühle, bestehend aus einem Gleichstrommotor (2), welcher als Nabenmotor im Laufrad des Kleinfahrzeuges angeordnet ist und als Außenläufermotor ausgebildet ist,
**dadurch gekennzeichnet**,
daß der Außenläufer (8) die Radnabe des Laufrades oder die Felge des Laufrades bildet, und
daß der Stator (9) des Gleichstrommotors über ein Bremsgehäuse (3) feststehend mit dem Kleinfahrzeug verbunden ist, und eine zentrale elektromagnetisch und manuell lösbare Federdruckbremse (4) aufweist,
welche bei Stromausfall den Außenläufer (8) des Gleichstrommotors (2) abbremst.

2. Antrieb nach Anspruch 1, dadurch gekennzeichnet, daß das Bremsgehäuse (3) topfförmig ausgebildet ist und auf der dem Außenläufer (8) gegenüberliegenden Seite des Gleichstrommotors (2) am Stator (9) befestigt ist und, daß im Bremsgehäuse (3) eine Bremsscheibe (37) mit einer federbelasteten Anpreßplatte (38) vorgesehen ist, wobei die Bremsscheibe (37) auf einem in das Bremsgehäuse (3) hineinragenden Kupplungszapfen (35) der Radnabenwelle (11) des Außenläufers (8) angeordnet ist und drehfest aber axial verschiebbar mit dem Kupplungszapfen (35) verbunden ist und,
daß die Anpreßplatte (38) im Bremsgehäuse (3) drehfest und axial verschiebbar geführt ist.

3. Antrieb nach Anspruch 1 oder 2, dadurch gekennzeichnet, daß im Bremsgehäuse (3) dem Stator (9) gegenüberliegend eine Ringnut mit einem als Ringmagneten (43) ausgebildeten Lüftmagneten vorgesehen ist, welcher in erregtem Zustand zum Lösen der Federdruckbremse (4) die Anpreßplatte (38) anzieht und,
daß innerhalb des Ringmagneten (43) eine zentrale Anpreßfeder oder mehrere auf einer Kreisbahn gleichmäßig verteilt angeordnete Anpreßfedern (39) vorgesehen sind, welche die Anpreßplatte (38) zusammen mit der Bremsscheibe (37) in stromlosem Zustand des Ringmagneten (43) gegen den Stator (9) preßt bzw. pressen.

4. Antrieb nach einem der Ansprüche 1 bis 3, dadurch gekennzeichnet, daß eine manuell betätigbare, koaxial zur Radnabenwelle (11) verlaufende Lüftstange (48) vorgesehen ist, welche statorseitig einen umlaufenden radial nach außen gerichteten Ringbund (50) aufweist, mit welchem die Lüftstange (48) die Anpreßplatte (38) durch eine zentrale Durchgangsbohrung der Anpreßplatte (38) statorseitig hintergreift, und mittels welcher die Anpreßplatte (38) zum Lösen der Federdruckbremse (4) gegen die Federkraft der Anpreßfeder bzw. der Anpreßfedern (39) axial bewegbar ist.

5. Antrieb nach einem der Ansprüche 1 bis 4, dadurch gekennzeichnet, daß das Bremsgehäuse (3) auf seiner dem Außenläufer (8) des Gleichstrommotors (2) gegenüberliegenden Seite einen Steuerraum (44) zur Aufnahme einer Leistungselektronik (7) aufweist, welcher mittels eines Gehäusedeckels (46) verschließbar ist.

6. Antrieb nach Anspruch 4 oder 5, dadurch gekennzeichnet, daß die Lüftstange (48) das Bremsgehäuse (3) und den Steuerraum (44) mit Gehäusedeckel (46) nach außen vorstehend zentral durchragt.

7. Antrieb nach Anspruch 4 oder 6, dadurch gekennzeichnet, daß die Lüftstange (48) an ihrem aus dem Bremsgehäuse (3) herausragenden Ende (51) mit einem quer zur Lüftstange (48) verlaufenden Betätigungshebel (52) versehen ist und an ihrem Ringbund (59) anpreßplattenseitig axial vorspringende, die Anpreßplatte (38) hintergreifende Keilflächen (57, 58) aufweist, die bei Drehung der Lüftstange (48) um ihre Längsachse (56) in Zusammenwirken mit entsprechenden Keilflächen (60,61) der Anpreßplatte (38) die Anpreßplatte (38) zum Lüften der Federdruckbremse (4) entgegen der Federkraft axial bewegen.

8. Antrieb nach einem der Ansprüche 1 bis 7, dadurch gekennzeichnet, daß der Außenläufer (8) topfförmig ausgebildet ist und aus einer kreisrunden Radscheibe (13) mit umlaufender, im wesentlichen zylindrischer, koaxial zur Drehachse (17) des Außenläufers (8) verlaufender Ringwand (16) besteht, an deren zylindrischer Innenfläche (18) mehrere Permanentmagnete (19) oder Elektromagnete als magnetische Pole angeordnet sind und daß der Stator (9) eine zentrale Lagernabe (10) aufweist, in welcher der Außenläufer (8) mit seiner Radnabenwelle (11) drehbar gelagert ist.

9. Antrieb nach einem der Ansprüche 1 bis 8, dadurch gekennzeichnet, daß der Gleichstrommotor (2) ein mehrpoliger, elektronisch kommutierter, bürstenloser Gleichstrommotor ist.

10. Antrieb nach einem der Ansprüche 1 bis 9, dadurch gekennzeichnet, daß das Bremsgehäuse (3) mit einem umlaufenden Montageflansch (63) versehen ist, über welchen der Antrieb (1) am Rahnengestell des Kleinfahrzeugs befestigbar ist und,
daß auf dem Montageflansch (63) zwischen dem Rahmengestell des Kleinfahrzeugs und dem Bremsgehäuse (3) eine Stützscheibe (65) mit radial nach außen gerichtetem Stützbügel (66) vorgesehen ist, durch welchen das Kleinfahrzeug über ein am äußeren Ende (67) des Stützbügels (66) angeordnetes Stützrad (68) gegen Kippen gesichert ist.

## Claims

1. Electrical drive system (1) for small vehicles, particularly wheelchairs, comprising a direct-current motor (2) which is located as a hub motor in the travelling wheel of a small vehicle, and is in the form of an external rotor motor,
characterised in that
the external rotor (8) forms the wheel hub of the travelling wheel or the rim of the travelling wheel, and
in that the stator (9) of the direct-current motor is rigidly connected via a brake housing (3) to the small vehicle, and has a central electromagnetically and manually releasable spring pressure brake (4), which brakes the external rotor (8) of the direct-current motor (2) upon power failure.

2. Drive system according to claim 1, characterised in that the brake housing (3) is cup-shaped and is attached to the stator (9) on the side of the direct-current motor (2) lying opposite the external rotor (8),
in that there is provided in the brake housing (3) a brake disc (37) with a spring-loaded pressure plate (38), whereby the brake disc (37) is arranged on a coupling pin (35) of the wheel hub shaft (11) of the outer rotor (8) projecting into the brake housing (3) and is non-rotatably but axially displaceably connected to the coupling pin (35),
and in that the pressure plate (38) is non-rotatably and axially displaceably guided in the brake housing (3).

3. Drive system according to claim 1 or 2, characterised in that there is provided in the brake housing (3), opposite the stator (9), an annular groove with a lifting magnet in the form of a ring magnet (43) which in the excited state attracts the pressure plate (38) in order to release the spring pressure brake (4),
and in that there are provided within the ring magnet (43) a central pressure spring or a plurality of pressure springs (39) uniformly distributed on a circular path, which presses or press the pressure plate (38) together with the brake disc (37) in the currentless state of the ring magnet (43) against the stator (9).

4. Drive system according to one of claims 1 to 3, characterised in that a manually activated lifting rod (48) extending coaxially relative to the wheel hub shaft (11) is provided, which has on the stator side a rotating radially outwardly aligned annular collar (50) by means of which the lifting rod (48) engages on the stator side behind the pressure plate (38) through a central passage bore of the pressure plate (38), and by means of which the pressure plate (38) is movable axially in order to release the spring pressure brake (4) against the spring force of the pressure spring or pressure springs (39).

5. Drive system according to one of claims 1 to 4, characterised in that the brake housing (3) has, on its side lying opposite the outer rotor (8) of the direct-current motor (2), a control chamber (44) for accommodating an electronic power system (7), and can be closed by means of a housing lid (46).

6. Drive system according to claim 4 or 5, characterised in that the lifting rod (48) projects centrally through the brake housing (3) and the control chamber (44) with housing lid (46) in an outward projecting manner.

7. Drive system according to claim 4 or 6, characterised in that the lifting rod (48) is provided on its end (51) projecting out of the brake housing (3) with an actuating lever (52) extending transversely relative to the lifting rod (48) and has, on its annular collar (59) on the pressure plate side, axially projecting wedge surfaces (57, 58) engaging behind the pressure plate (38) and which, upon rotation of the lifting rod (48) about its longitudinal axis (56), in co-operating with corresponding wedge surfaces (60, 61) of the pressure plate (38), move said pressure plate (38) axially against the spring force in order to release the spring pressure brake (4).

8. Drive system according to one of claims 1 to 7, characterised in that the external rotor (8) is cup-shaped, and comprises a circular wheel disc (13) with a rotating, substantially cylindrical annular wall (16) extending coaxially to the axis of rotation (17) of the outer rotor (8), and on whose cylindrical inner surface (18) there are located a plurality of permanent magnets (19) or electromagnets as magnetic poles, and in that the stator (9) has a central bearing hub (10) in which the outer rotor (8) is rotatably mounted with its wheel hub shaft (11).

9. Drive system according to one of claims 1 to 8, characterised in that the direct-current motor (2) is a multi-poled electronically commutated, brushless direct-current motor.

10. Drive system according to one of claims 1 to 9, characterised in that the brake housing (3) is provided with a peripheral assembly flange (63) by means of which the drive system (1) may be attached to the frame of the small vehicle, and in that there is provided on the assembly flange (63) between the frame of the small vehicle and the brake housing (3) a support disc (65) with radially outwardly directed support bracket (66) by means of which the small vehicle is secured against tilting via a support wheel (68) located at the outer end (67) of the support bracket (66).

## Revendications

1. Entraînement électrique (1) pour petits véhicules, pour des fauteuils roulants en particulier, composé d'un moteur à courant continu (2), logé dans le moyeu de la roue motrice du petit véhicule et réalisé sous forme de moteur à induit extérieur, caractérisé en ce que l'induit extérieur (8) forme le moyeu de la roue motrice ou la jante de cette dernière, et en ce que le stator (9) du moteur à courant continu a un assemblage fixe avec le petit véhicule, par l'intermédiaire d'un carter de frein (3), et présente un frein à ressort central (4) à desserrage électromagnétique et manuel, qui freine l'induit extérieur (8) du moteur à courant continu (2) en cas de panne de courant.

2. Entraînement suivant la revendication 1, caractérisé en ce que le carter de frein (3) a une réalisation en forme de pot et est fixé sur le stator (9) sur le côté du moteur à courant continu (2), opposé à l'induit extérieur (8), en ce qu'un disque de frein (37), avec une plaque de serrage (38) chargée par ressort, est prévu dans le carter de frein (3), le disque de frein (37) étant disposé sur un pivot d'accouplement (35), qui pénètre dans le carter de frein (3), de l'axe de moyeu (11) de l'induit extérieur (8), et étant assemblé sans possibilité de rotation, mais avec une possibilité de déplacement dans le sens axial, avec le pivot d'accouplement (35), et en ce que la plaque de serrage (38) est guidée sans possibilité de rotation et avec une possibilité de déplacement axial dans le carter de frein (3).

3. Entraînement suivant l'une des revendications 1 et 2, caractérisé en ce qu'une rainure annulaire, avec un aimant de desserrage réalisé sous forme d'aimant torique (43), est prévue dans le carter de frein (3) en vis-à-vis du stator (9), cet aimant attirant la plaque de serrage (38), à l'état d'excitation, pour le desserrage du frein à ressort (4), et en ce qu'un ressort de pression central, ou plusieurs ressorts de pression (39) régulièrement répartis sur une orbite, sont prévus à l'intérieur de l'aimant permanent (43), ce et/ou ces ressorts pressant la plaque de serrage (38), avec le disque de frein (37), contre le stator (9), lorsque l'aimant torique (43) est privé de courant.

4. Entraînement suivant l'une des revendications 1 à 3, caractérisé en ce qu'une barre de desserrage (48), actionnable manuellement et coaxiale à l'axe de moyeu (11), est prévue, cette barre présentant, côté stator, un collet annulaire périphérique (50) dirigé dans le sens radial externe, par lequel la barre de desserrage (48) enserre côté stator la plaque de serrage (38), par un trou de passage central de la plaque (38), et au moyen duquel la plaque de serrage (38) peut être déplacée dans le sens axial pour le desserrage du frein à ressort (4), contre la force du ressort de pression et/ou des ressorts de pression (39).

5. Entraînement suivant l'une des revendications 1 à 4, caractérisé en ce que le carter de frein (3) présente, sur son côté opposé à l'induit extérieur (8) du moteur à courant continu (2), un compartiment de commande (44) prévu pour recevoir une électronique de puissance (7), et qui peut être obturé au moyen d'un couvercle de carter (46).

6. Entraînement suivant l'une des revendications 4 et 5, caractérisé en ce que la barre de desserrage (48) traverse d'une manière centrale le carter de frein (3) et le compartiment de commande (44), avec le couvercle de carter (46), en dépassant vers l'extérieur.

7. Entraînement suivant l'une des revendications 4 et 6, caractérisé en ce que la barre de desserrage (48) est munie, sur son extrémité (51) dépassant du carter de frein (3), d'un levier de commande (52) situé à la transversale de la barre (48), et présente sur son collet annulaire (50) des surfaces cunéiformes (57, 58) en saillie axiale côté plaque de serrage, qui enserrent la plaque de serrage (38) et déplacent dans le sens axial, lors de la rotation de la barre de desserrage (48) autour de son axe longitudinal (56), la plaque de serrage (38) pour le desserrage du frein à ressort (4), contre la force de ressort, en concours avec des surfaces cunéiformes correspondantes (60, 61) de la plaque de serrage (38).

8. Entraînement suivant l'une des revendications 1 à 7, caractérisé en ce que l'induit extérieur (8) est réalisé en forme de pot et se compose d'un disque de roue circulaire (13), avec une paroi annulaire périphérique (16), essentiellement cylindrique, coaxiale à l'axe de rotation (17) de l'induit extérieur (8), et sur la surface interne cylindrique (18) de laquelle sont disposés plusieurs aimants permanents (19) ou électroaimants, comme pôles magnétiques, et en ce que le stator (9) présente un moyeu central (10), dans lequel l'induit extérieur (8) est logé par son axe de moyeu (11) avec une possibilité de rotation.

9. Entraînement suivant l'une des revendications 1 à 8, caractérisé en ce que le moteur à courant continu (2) est un moteur sans balai, multipolaire, à commutation électronique.

10. Entraînement suivant l'une des revendications 1 à 9, caractérisé en ce que le carter de frein (3) est muni d'une bride de montage périphérique (63), au moyen de laquelle l'entraînement (1) peut être fixé sur le châssis du petit véhicule, et en ce qu'un disque d'appui (65), muni d'un étrier-support (66) dirigé dans le sens radial externe, est prévu sur la bride de montage (63), entre le châssis du petit véhicule et le carter de frein (3), ce disque protégeant le petit véhicule de tout risque de basculement, par l'intermédiaire d'une roue d'appui (68) disposée sur l'extrémité externe (67) de l'étrier-support (66).
